# EUROPEAN PATENT SPECIFICATION

(11) **EP 3 591 330 B1**
(45) Date of publication and mention of the grant of the patent: **24.03.2021**
(21) Application number: 18181394.0
(22) Date of filing: 03.07.2018
(51) Int. Cl.: F41G 1/32, F41G 3/06, G03B 15/03, G03B 15/05, G03B 15/06, G03B 17/38, G03B 17/56, G08C 17/02, G08C 23/04, H04N 5/232, H04N 5/247, H04N 5/765, H04N 5/77, H04N 5/775, H04N 21/41, H04N 21/422, H04N 21/4227, H04N 21/4363, G08B 25/00, G08B 25/10

(54) **INFORMATION-CAPTURING DEVICE**
INFORMATIONSERFASSUNGSVORRICHTUNG
DISPOSITIF DE CAPTURE D'INFORMATIONS

(43) Date of publication of application: 08.01.2020
(73) Proprietor: Getac Technology Corporation, Taipei City 11568 (TW)
(72) Inventor: HU, Chien-Chih, Taipei City 11568 (TW)
(74) Representative: Viering, Jentschura & Partner mbB Patent- und Rechtsanwälte

(56) References cited:
- EP-A2- 2 983 357
- US-A1- 2018 061 200
- US-A1- 2018 182 215

## Description

### BACKGROUND OF THE INVENTION

### FIELD OF THE INVENTION

The present disclosure relates to information-capturing devices and, more particularly, to an information-capturing device capable of starting wirelessly other corresponding devices within a sensing radius of the information-capturing device.

### DESCRIPTION OF THE PRIOR ART

In general, information-capturing devices are portable and capable of capturing media data, such as images and sounds. Owing to increasing public awareness of information security, portable information-capturing devices, capable of being easily carried and capturing information in real time, function as security-related auxiliary devices and have wide application. For instance, police officers on duty carry information-capturing devices to assist with policing. Furthermore, media data recorded on the information-capturing devices can serve evidential purposes. In practice, users operate start switches on portable information-capturing devices to enable the portable information-capturing devices to capture information in real time.

US 2018/061200 A1 discloses an environmental surveillance system including at least one status sensor, a control device, and at least one portable information capturing device. The control device is coupled to the status sensors to send a broadcast packet in accordance with sensing signals generated from the status sensors. The broadcast packet includes a broadcast data. The broadcast data includes an actuation command. The at least one portable information capturing device receives the broadcast packet and compares a match data with the broadcast data in the broadcast packet. When the match data matches the broadcast data, the at least one portable information capturing device starts a media capturing procedure in accordance with the actuation command.

EP 2 983 357 A2 discloses a recording system for an emergency response unit including a first data collection device configured to record a first video, audio or data segment with an incident identifier and transmit a message including the incident identifier. A second data collection device may receive the message and, as appropriate, record at least a second video, audio or data segment with the incident identifier, allowing the first segment and the second segment to be associated using the incident identifier.

### SUMMARY OF THE INVENTION

However, in emergency situations, it is either too late for users to start the information-capturing devices by hand or too late for crucial images and/or sounds to be captured with the started information-capturing devices. Furthermore, every police officer on duty usually carries one and only one information-capturing device; as a result, media data captured with the information-capturing device are shot from a single angle rather than sufficiently multiple angles. Moreover, the odds are that some police officers may not even carry any information-capturing devices and thus cannot capture media data while on duty. Last but not least, some information-capturing devices are not capable of networking and thus cannot inform a remote server of an event as soon as the event occurs.

In view of the aforesaid drawbacks of the prior art, the present disclosure provides a method of starting an information-capturing device wirelessly, as opposed to manually, as soon as an event occurs in the vicinity of the information-capturing device, so as for the information-capturing device to record ambient images and/or sounds automatically and instantly. The object of the invention is achieved by the subject-matter of claim 1. Advantageous embodiments are disclosed by the dependent claims.

In some examples, the present disclosure provides a method of starting an information-capturing device capable of informing a remote server of an event through a neighboring device which supports a remote communication technology.

In an example, an information-capturing device comprises a near-field communication module, a video recording unit, a storing unit, and a controlling unit. The controlling unit is coupled to the near-field communication module, the video recording unit, and the storing unit. The near-field communication module receives an event message including a destination information. The video recording unit captures an ambient data. The storing unit stores a first identification code. The controlling unit compares the first identification code with the dedicated identification code specified by the destination information contained in the event message. The controlling unit starts the video recording unit if the first identification code matches the dedicated identification code specified by the destination information contained in the event message. The controlling unit broadcasts the event message through the near-field communication module if the first identification code does not match the dedicated identification code specified by the destination information contained in the event message.

In an example, an information-capturing device comprises a near-field communication module, a video recording unit, a storing unit, and a controlling unit. The controlling unit is coupled to the near-field communication module, the video recording unit, and the storing unit. The near-field communication module receives an event message including a destination information. The video recording unit captures an ambient data. The storing unit stores a first identification code and a neighboring device checklist. The controlling unit compares the first identification code with the dedicated identification code specified by the destination information contained in the event message . The controlling unit starts the video recording unit if the first identification code matches the dedicated identification code specified by the destination information contained in the event message. The controlling unit searches the neighboring device checklist by the destination information if the first identification code does not match the dedicated identification code specified by the destination information contained in the event message. The controlling unit broadcasts the event message through the near-field communication module if the neighboring device checklist has at least a second identification code matching the dedicated identification code specified by the destination information contained in the event message.

### BRIEF DESCRIPTION OF THE DRAWINGS

FIG. 1 is a schematic view of the state of an event detecting and recording system according to an embodiment of the present disclosure;
FIG. 2 is a schematic view of the state of the event detecting and recording system according to another embodiment of the present disclosure;
FIG. 3 is a schematic view of the state of the event detecting and recording system according to yet another embodiment of the present disclosure;
FIG. 4 is a function block diagram of an information-capturing device according to an embodiment of the present disclosure;
FIG. 5 is a flowchart of a method of starting an information-capturing device according to the first embodiment of the present disclosure;
FIG. 6 is a flowchart of the method of starting an information-capturing device according to the second embodiment of the present disclosure;
FIG. 7 is a flowchart of the method of starting an information-capturing device according to the third embodiment of the present disclosure;
FIG. 8 is a flowchart of another method of starting an information-capturing device according to the fourth embodiment of the present disclosure;
FIG. 9 is a flowchart of the other method of starting an information-capturing device according to the fifth embodiment of the present disclosure;
FIG. 10 is a flowchart of the other method of starting an information-capturing device according to the sixth embodiment of the present disclosure;
FIG. 11 is a flowchart of the other method of starting an information-capturing device according to the seventh embodiment of the present disclosure;
FIG. 12 is a flowchart of the other method of starting an information-capturing device according to the eighth embodiment of the present disclosure;
FIG. 13 is a function block diagram of the information-capturing device according to another embodiment of the present disclosure; and
FIG. 14 is a flowchart of the other method of starting an information-capturing device according to some embodiments of the present disclosure.

### DETAILED DESCRIPTION OF THE EMBODIMENTS

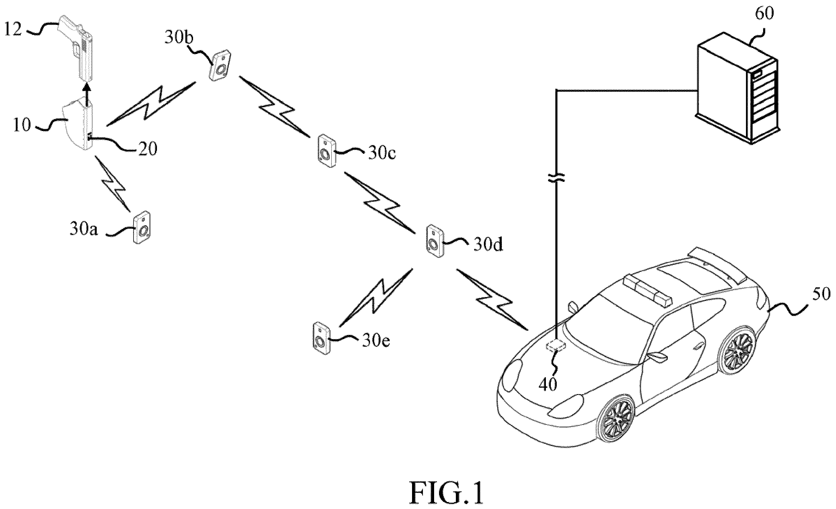

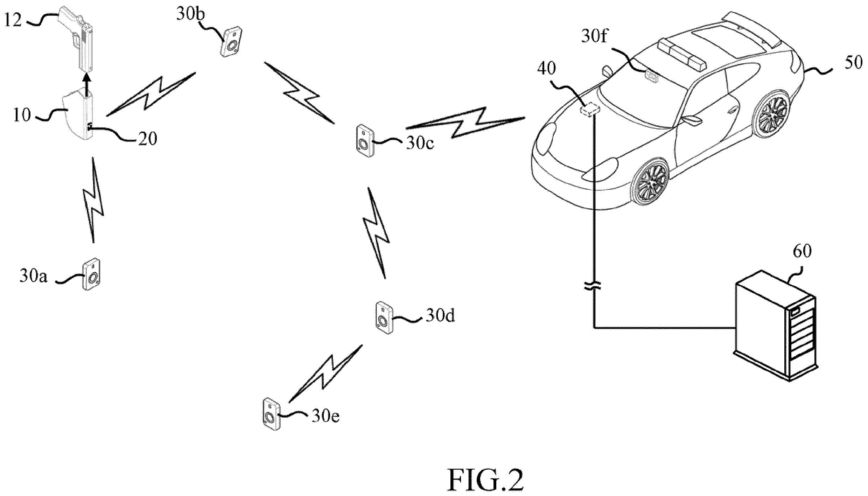

Referring to FIG. 1 and FIG. 2, an event detecting and recording system comprises a state sensor 20, a plurality of information-capturing devices 30a∼30f, a trigger box device 40 and a server 60.

The state sensor 20 senses a predetermined operation of a target and generates an event message when the target undergoes the predetermined operation. For instance, assuming that the target is a gun 10, the state sensor 20 is mounted on a holster 12 such that, as soon as a user pulls the gun 10, the state sensor 20 senses the exit of the gun 10 from the holster 12 and thereby generates an event message. The state sensor 120 comprises a metal sensing component. The metal sensing component detects whether the gun 10 is present within a sensing radius of the state sensor 120. In another exemplary embodiment, the state sensor 20 is disposed on an article of jewelry that is worn on a human wrist (for example, a bracelet) or on a human finger (for example, a ring) to sense the exit of the gun 10 from the holster 12 and thereby generates an event message. The state sensor 20 comprises a posture sensing component. The posture sensing component senses whether the human wrist or finger is moving and, if yes, senses for the direction in which the human wrist or finger is moving. In yet another exemplary embodiment, the state sensor 20 detects for a sound of the firing of the gun 10 by sound sampling and generates an event message upon detection of the firing sound.

In some embodiments, the information-capturing devices 30a∼30f are normally in a shutdown state, a sleep state, or an idle state and thus will be started only in case of an event to reduce their power consumption and extend their service life. In some embodiments, the information-capturing devices 30a∼30e are portable image pickup devices. In some embodiments, the information-capturing device 30f is a stationary image pickup device, such as a dashcam mounted on a vehicle 50.

In some embodiments, the information-capturing devices 30a∼30f are not capable of networking, *i.e.,* not equipped with any remote communication module (for example, WIFI module, 3G module, or 4G module), with a view to reducing their power consumption and extending their service life.

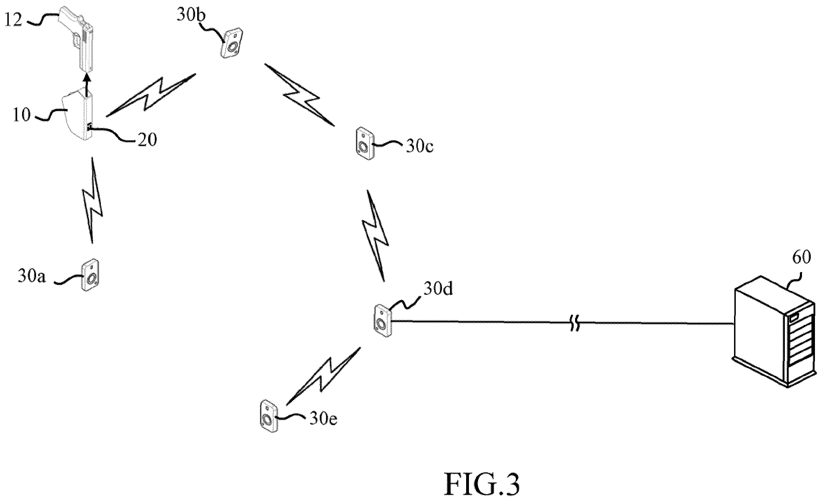

In some embodiments illustrated by FIG. 3, among the information-capturing devices 30a∼30f, the information-capturing devices 30a∼30c, 30e∼30f are not capable of networking, whereas the information-capturing device 30d is capable of networking.

The state sensor 20 further comprises a near-field communication module. As soon as an event message is generated, the near-field communication module broadcasts the event message. The event message includes a destination information. For instance, the near-field communication module is a Bluetooth beacon module, and the event message is a beacon signal.

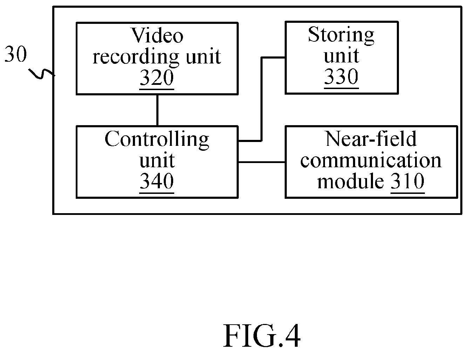

In some embodiments illustrated by FIG. 4, each information-capturing device 30 (*i.e.,* any one of the information-capturing devices 30a∼30f) comprises: a near-field communication module 310, a video recording unit 320, a storing unit 330, and a controlling unit 340. The controlling unit 340 is coupled to the near-field communication module 310, the video recording unit 320, and the storing unit 330. The information-capturing device 30 has an identification code, and the identification code is stored in the storing unit 330 of the information-capturing device 30. In some embodiments, the information-capturing devices 30a∼30f have their respective unique identification codes.

For the sake of illustration, the identification code stored in the storing unit 330 of the information-capturing device 30 is hereinafter referred to as the first identification code.

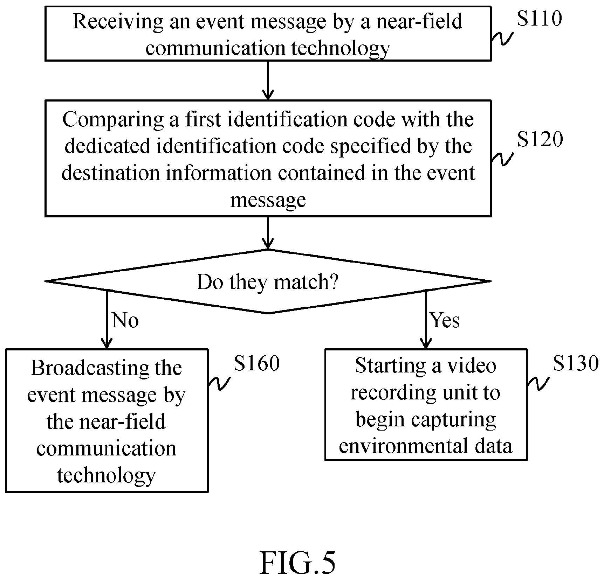

Referring to FIG. 1 through FIG. 5, the information-capturing device 30 receives an event message by a near-field communication technology (step S110), that is, the near-field communication module 310 of the information-capturing device 30 receives the event message broadcast by the state sensor 20. The controlling unit 340 reads the first identification code from the storing unit 330 and then compares the first identification code with the dedicated identification code specified by the destination information contained in the event message contained in the event message (step S120).

In an embodiment, if the first identification code matches the dedicated identification code specified by the destination information contained in the event message, the controlling unit 340 starts the video recording unit 320 (step S130) such that the video recording unit 320 begins capturing ambient data and thus generating a corresponding media file, that is, video recording ambient images and/or sounds. If the first identification code does not match the dedicated identification code specified by the destination information contained in the event message, the information-capturing device 30 broadcasts the event message by a near-field communication technology (step S160); in this regard, the controlling unit 340 sends the received event message out directly by broadcasting through the near-field communication module 310.

In some embodiments, the destination information contained in the event message specifies a dedicated identification code. For instance, the first identification code stored in the information-capturing device 30a is 05, and the first identification code stored in the information-capturing device 30b is 06, but the destination information specifies the dedicated identification code to be 05. The information-capturing devices 30a, 30b are within the signal sensing radius of the state sensor 20, whereas the information-capturing devices 30c∼30f are outside the signal sensing radius of the state sensor 20. The information-capturing devices 30a, 30b receive the event message broadcast by the state sensor 20. Since the first identification code 05 stored in the information-capturing device 30a matches the dedicated identification code 05 specified by the destination information contained in the event message, the video recording unit 320 of the information-capturing device 30a starts and begins capturing ambient data. Since the first identification code 06 stored in the information-capturing device 30b does not match the dedicated identification code 05 specified by the destination information contained in the event message, the near-field communication module 310 of the information-capturing device 30b sends the event message out by broadcasting. At this point in time, the information-capturing device 30c which is within the signal sensing radius of the information-capturing device 30b receives the event message broadcast by the information-capturing device 30b. Therefore, the event message is transmitted from the information-capturing device 30b to the information-capturing device 30c. Since the first identification code stored in the information-capturing device 30c does not match the dedicated identification code specified by the destination information contained in the event message, the near-field communication module 310 of the information-capturing device 30c sends the event message out by broadcasting such that the event message is broadcast to the information-capturing devices 30d, 30e which are within the signal sensing radius and then forwarded to the trigger box device 40.

The trigger box device 40 is capable of networking, *i.e.,* equipped with a remote communication module (for example, WIFI module, 3G module, or 4G module.) After receiving the event message, the trigger box device 40 generates a report signal according to the received event message and sends the report signal to a server 60 by a remote communication technology, that is, sending the report signal to the server 60 by a network which the remote communication module connects to. The report signal includes an event message and a position data related to the trigger box device 40. The event message further includes a source information. The source information indicates the identification code of the state sensor 20 which generates the event message. Therefore, the source information contained in the event message included in the report signal informs the server 60 of the place where the event occurs. In some embodiments, the trigger box device 40 is mounted on the vehicle 50 and connected to a network through the Internet of Vehicles (loV) which the vehicle 50 connects to.

In some embodiments, the destination information contained in the event message specifies some or all of the identification codes. For instance, the first identification code stored in the information-capturing device 30a is 05, and the first identification code stored in the information-capturing device 30b is 06, but the destination information specifies all. After the information-capturing devices 30a, 30b have received the event message, their controlling units 340 determine that the first identification codes match the dedicated identification codes specified by the destination information contained in the event message and thus start the video recording unit 320 so as for the video recording unit 320 to begin capturing ambient data.

In another embodiment, the event message further includes a timestamp, and the timestamp indicates the time at which the state sensor 20 generates the event message. The storing unit 330 of each information-capturing device 30 further stores a time threshold.

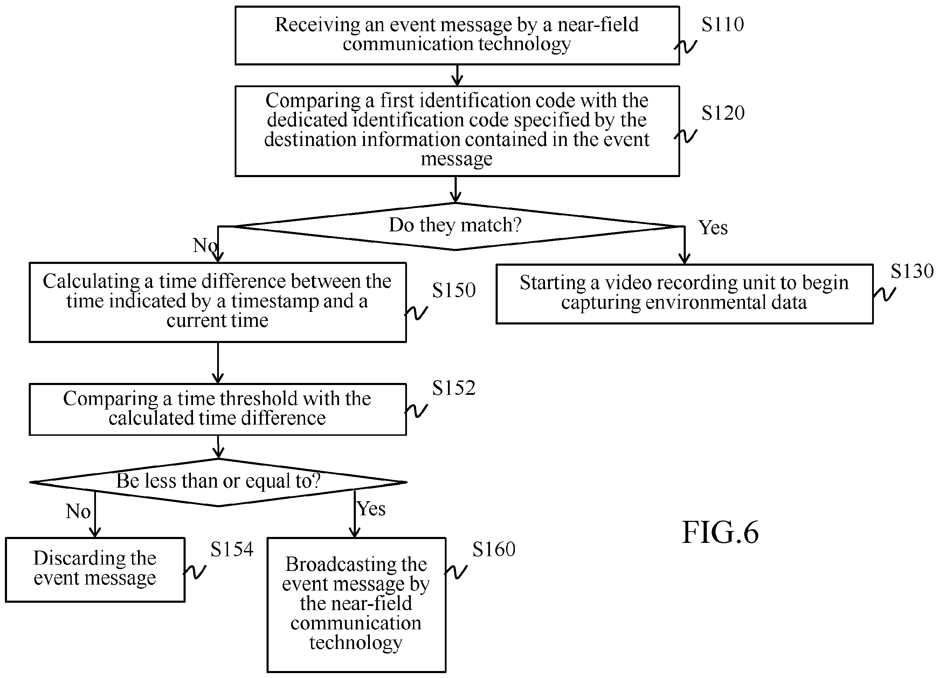

In an embodiment illustrated by FIG. 6, if the first identification code matches the dedicated identification code specified by the destination information contained in the event message, the controlling unit 340 starts the video recording unit 320 (step S130) such that the video recording unit 320 begins capturing an ambient data and thus generating a corresponding media file, that is, video recording ambient images and/or sounds. If the first identification code does not match the dedicated identification code specified by the destination information contained in the event message, the controlling unit 340 of the information-capturing device 30 calculates the time difference between the time indicated by the timestamp in the event message and the current time (step S150) and then compares the time threshold with the calculated time difference (step S152). If the time indicated by the timestamp is greater than the time threshold, the controlling unit 340 discards the received event message (step S154), and thus does not perform the step of broadcasting the event message *(i.e.,* does not perform step S160.) If the time indicated by the timestamp is less than or equal to the time threshold, the controlling unit 340 broadcasts the event message by a near-field communication technology (step S160); in this regard, the controlling unit 340 sends the received event message out directly by broadcasting through the near-field communication module 310. For instance, assuming that the time threshold is 10 minutes, if the time difference between the time of generating the event message and the current time (that is, the time difference between the time indicated by the timestamp and the current time) exceeds 10 minutes, the controlling unit 340 discards the received event message. Conversely, if the time difference between the time of generating the event message and the current time (that is, the time difference between the time indicated by the timestamp and the current time) is less than or equal to 10 minutes, the controlling unit 340 broadcasts the event message by a near-field communication technology.

In yet another embodiment, the event message further includes a position data, and the position data indicates a geographic position at which the state sensor 20 generates the event message. In this regard, the storing unit 330 of each information-capturing device 30 further stores a distance threshold.

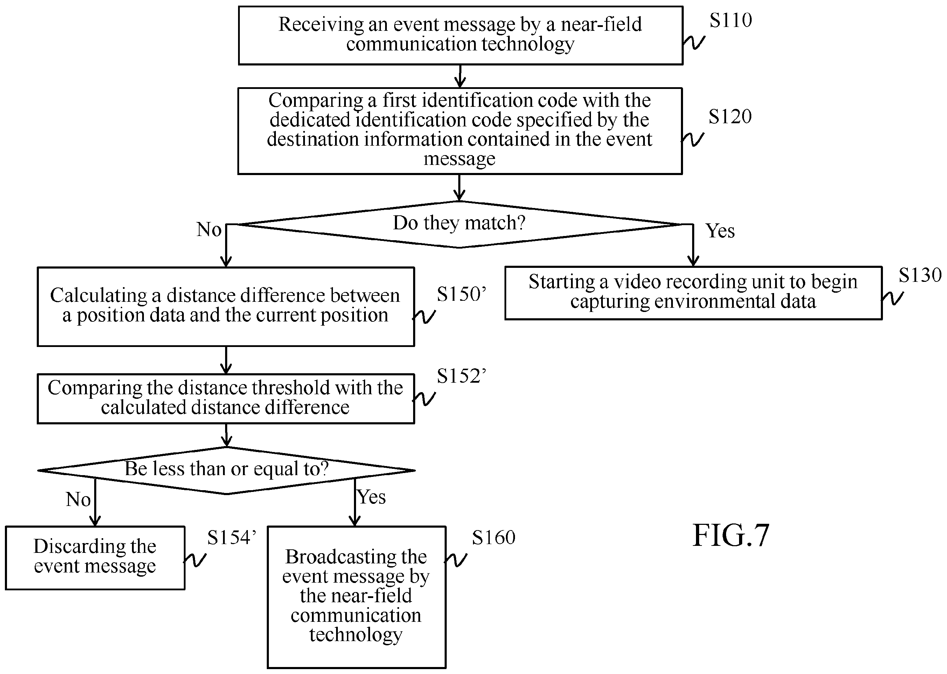

Referring to FIG. 7, if the first identification code matches the dedicated identification code specified by the destination information contained in the event message, the controlling unit 340 starts the video recording unit 320 (step S130) such that the video recording unit 320 begins capturing an ambient data and thus generating a corresponding media file, that is, video recording ambient images and/or sounds. If the first identification code does not match the dedicated identification code specified by the destination information contained in the event message, the controlling unit 340 of the information-capturing device 30 calculates the distance difference between the geographic position indicated by the position data contained in the event message and the current position (step S150') and then compares the distance threshold with the calculated distance difference (step S152'). If the distance difference is greater than the distance threshold, the controlling unit 340 discards the received event message (step S154'), that is, does not perform the step of broadcasting the event message (*i.e.,* does not perform step S160.) If the distance difference is less than or equal to the distance threshold, the controlling unit 340 broadcasts the event message by a near-field communication technology (step S160); in this regard, the controlling unit 340 sends the received event message out directly by broadcasting through the near-field communication module 310.

In some embodiments, the storing unit 330 of each information-capturing device 30 further stores a neighboring device checklist. The neighboring device checklist records the identification codes of the other information-capturing devices 30 in the vicinity of the information-capturing device 30. For the sake of illustration, the identification codes recorded in the neighboring device checklist are hereinafter referred to as second identification codes.

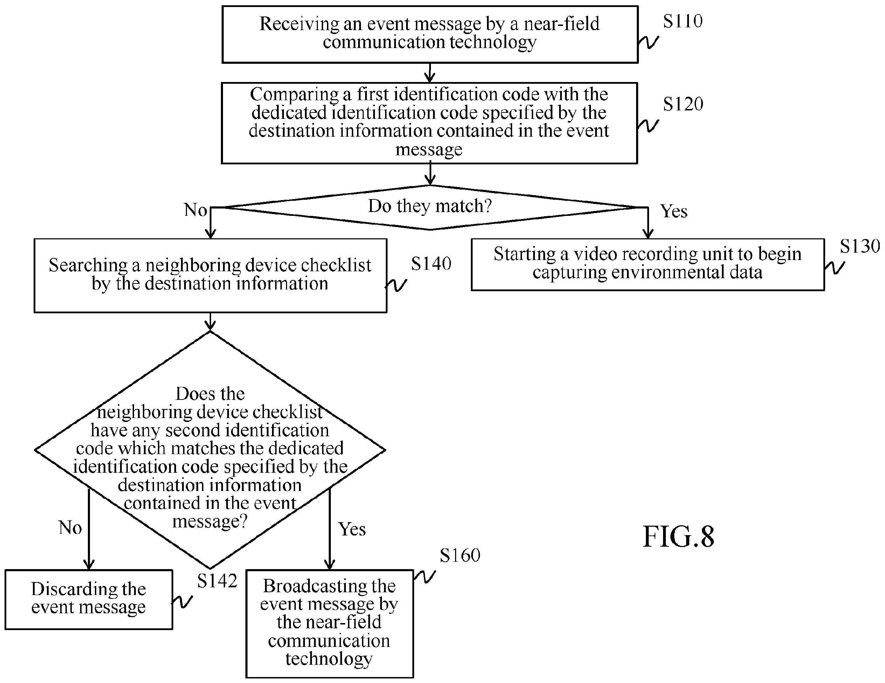

Referring to FIG. 8, if the first identification code matches the dedicated identification code specified by the destination information contained in the event message, the controlling unit 340 starts the video recording unit 320 (step S130) such that the video recording unit 320 begins capturing an ambient data and thus generating a corresponding media file, that is, video recording ambient images and/or sounds. If the first identification code does not match the dedicated identification code specified by the destination information contained in the event message, the controlling unit 340 of the information-capturing device 30 searches for a neighboring device checklist by the destination information contained in the event message (step S140). If the neighboring device checklist has one or more second identification codes which match the dedicated identification code specified by the destination information contained in the event message, the information-capturing device 30 broadcasts the received event message by a near-field communication technology (step S160); in this regard, the controlling unit 340 sends the received event message out directly by broadcasting through the near-field communication module 310. Conversely, if the neighboring device checklist does not have one or more second identification codes which match the dedicated identification code specified by the destination information contained in the event message, the controlling unit 340 of the information-capturing device 30 discards the received event message (step S142).

In another embodiment, the event message further includes a timestamp, and the timestamp indicates the time at which the state sensor 20 generates the event message. In this regard, the storing unit 330 of each information-capturing device 30 further stores a time threshold.

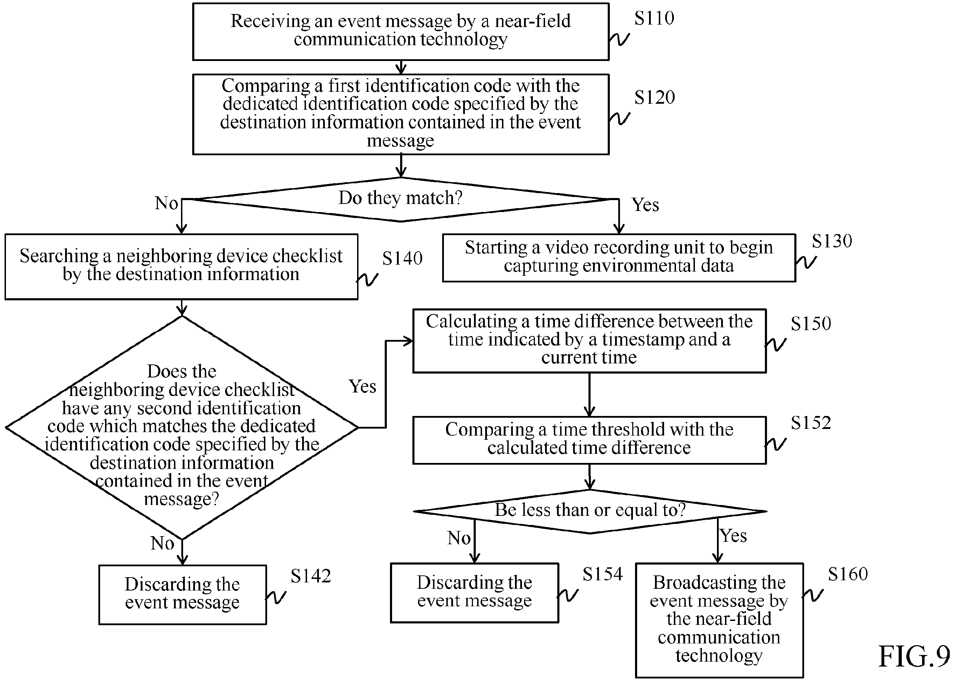

In an exemplary embodiment illustrated by FIG. 9, if the neighboring device checklist has one or more second identification codes which match the dedicated identification code specified by the destination information contained in the event message, the controlling unit 340 of the information-capturing device 30 calculates the time difference between the time indicated by the timestamp contained in the event message and the current time (step S150) and then compares the time threshold with the calculated time difference (step S152). If the time indicated by the timestamp is greater than the time threshold, the controlling unit 340 discards the received event message (step S154), that is, does not perform the step of broadcasting the event message *(i.e.,* does not perform step S160.) If the time indicated by the timestamp is less than or equal to the time threshold, the controlling unit 340 broadcasts the event message by a near-field communication technology (step S160); in this regard, the controlling unit 340 sends the received event message out directly by broadcasting through the near-field communication module 310.

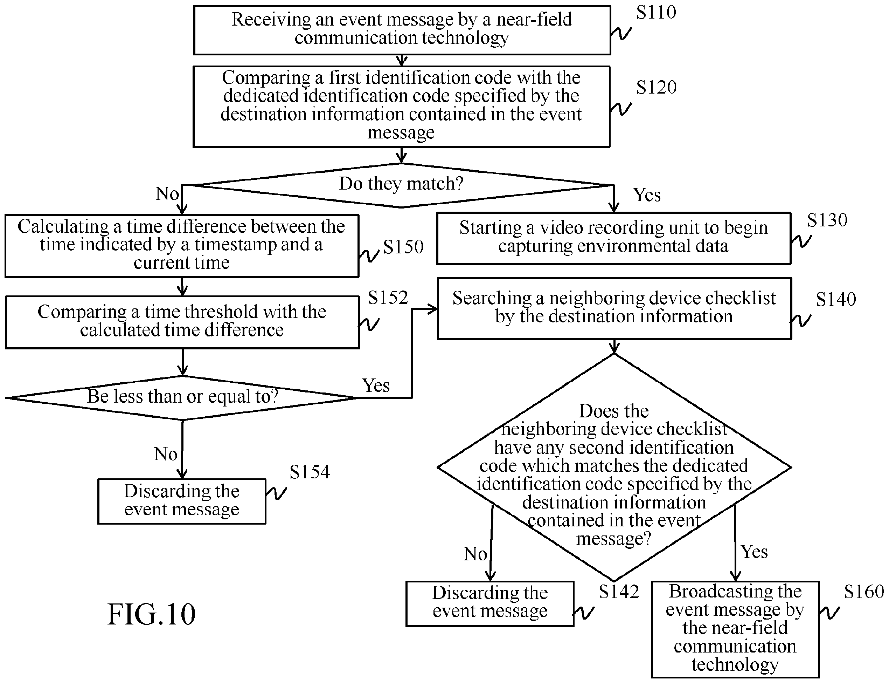

In another exemplary embodiment illustrated by FIG. 10, if the first identification code does not match the dedicated identification code specified by the destination information contained in the event message, the controlling unit 340 of the information-capturing device 30 calculates the time difference between the time indicated by the timestamp in the event message and the current time (step S150) and then compares the time threshold with the calculated time difference (step S152). If the time indicated by the timestamp is greater than the time threshold, the controlling unit 340 discards the received event message (step S154), that is, does not perform the step of broadcasting the event message (*i.e.,* does not perform step S160.) If the time indicated by the timestamp is less than or equal to the time threshold, the controlling unit 340 searches for a neighboring device checklist by the destination information contained in the event message (step S140). If the neighboring device checklist has one or more second identification codes which match the dedicated identification code specified by the destination information contained in the event message, the information-capturing device 30 broadcasts the event message by a near-field communication technology (step S160); in this regard, the controlling unit 340 sends the received event message out directly by broadcasting through the near-field communication module 310.

In yet another embodiment, the event message further includes a position data, and the position data indicates a geographic position at which the state sensor 20 generates the event message. In this regard, the storing unit 330 of each information-capturing device 30 further stores a distance threshold.

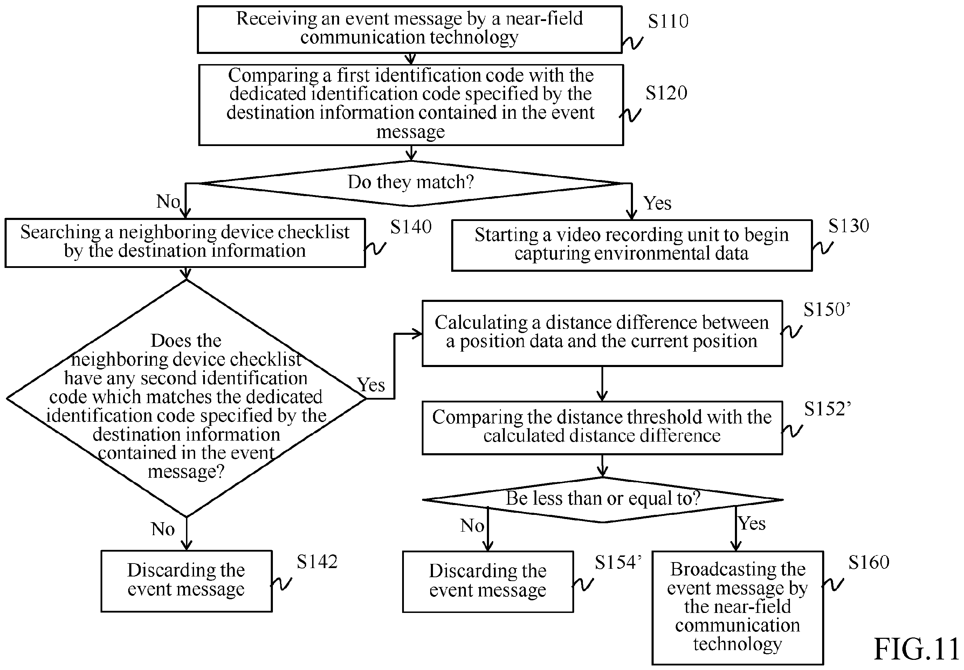

In an exemplary embodiment illustrated by FIG. 11, if the neighboring device checklist has one or more second identification codes which match the dedicated identification code specified by the destination information contained in the event message, the controlling unit 340 of the information-capturing device 30 calculates the distance difference between the geographic position indicated by the position data contained in the event message and the current position (step S150') and then compares the distance threshold with the calculated distance difference (step S152'). If the distance difference is greater than the distance threshold, the controlling unit 340 discards the received event message (step S154'), that is, does not perform the step of broadcasting the event message (*i.e.,* does not perform step S160.) If the distance difference is less than or equal to the distance threshold, the information-capturing device 30 broadcasts the event message by a near-field communication technology (step S160); in this regard, the controlling unit 340 sends the received event message out directly by broadcasting through the near-field communication module 310. Conversely, if the neighboring device checklist does not have one or more second identification codes which match the dedicated identification code specified by the destination information contained in the event message, the controlling unit 340 of the information-capturing device 30 discards the received event message (step S142).

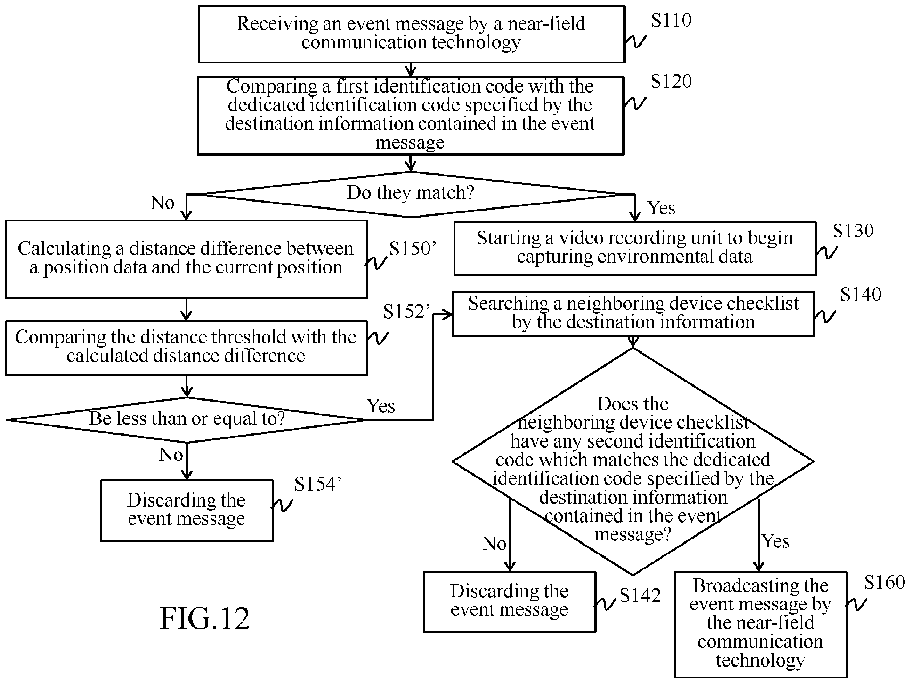

In another exemplary embodiment illustrated by FIG. 12, if the first identification code does not match the dedicated identification code specified by the destination information contained in the event message, the controlling unit 340 of the information-capturing device 30 calculates the distance difference between the geographic position indicated by the position data contained in the event message and the current position (step S150') and then compares the distance threshold with the calculated distance difference (step S152'). If the distance difference is greater than the distance threshold, the controlling unit 340 discards the received event message (step S154'), that is, does not perform the step of broadcasting the event message (*i.e.,* does not perform step S160.) If the distance difference is less than or equal to the distance threshold, the controlling unit 340 searches for a neighboring device checklist by the destination information contained in the event message (step S140). If the neighboring device checklist has one or more second identification codes which match the dedicated identification code specified by the destination information contained in the event message, the information-capturing device 30 broadcasts the event message by a near-field communication technology (step S160); in this regard, the controlling unit 340 sends the received event message out directly by broadcasting through the near-field communication module 310.

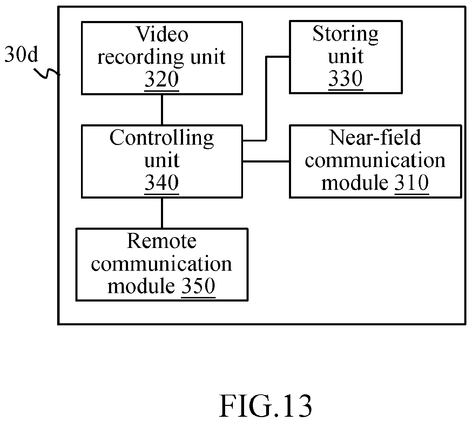

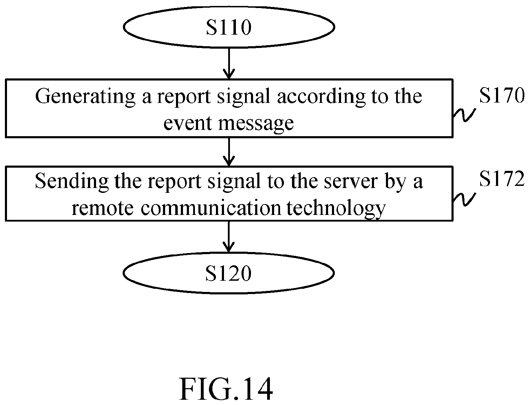

In some embodiments illustrated by FIG. 3, FIG. 13 and FIG. 14, if the information-capturing device 30d receiving an event message has a remote communication module 350, the controlling unit 340 generates a report signal according to the event message (step S170), and then the remote communication module 350 sends the report signal to the server 60 by a remote communication technology (step S172). The report signal includes an event message and the position data of the trigger box device 40. The event message further includes a source information. The source information indicates the identification code of the state sensor 20 generating the event message. Therefore, the source information contained in the event message included in the report signal informs the server 60 of the place where the event occurs.

Although the steps of the method of the present disclosure are described above as performed in specific order, the order is not restrictive of the present disclosure. Persons skilled in the art understand that in a reasonable situation some of the steps may be performed simultaneously or in reverse order.

In some embodiments, the destination information contained in the event message generated by the state sensor 20 is preset by an electronic device and stored in the storing unit 330. Therefore, in a preset state, the state sensor 20 communicates with the electronic device in a wired or wireless manner. Afterward, the electronic device generates a preset value of the destination information and sends the preset value to the state sensor 20. The state sensor 20 sets, according to the received preset value, one or more specified identification codes for the destination information when generating the event message.

In an embodiment, the identification code of the information-capturing device 30 is preset for delivery and stored in the storing unit 330 of the information-capturing device 30. In another embodiment, the identification code of the information-capturing device 30 is preset by an electronic device and stored in the storing unit 330 of the information-capturing device 30. Therefore, in a preset state, the information-capturing device 30 communicates with the electronic device in a wired or wireless manner. Afterward, the electronic device generates and sends a preset value of an identification code to the information-capturing device 30.

In an embodiment, the aforesaid thresholds (the time threshold and the distance threshold) are preset for delivery and stored in the storing unit 330 of the information-capturing device 30. In another embodiment, the aforesaid thresholds are preset by an electronic device and stored in the storing unit 330 of the information-capturing device 30. Therefore, in a preset state, information-capturing device 30 communicates with the electronic device in a wired or wireless manner. Afterward, the electronic device generates and sends a preset value of a threshold to the information-capturing device 30.

In an embodiment, the neighboring device checklist is compiled by the server 60, loaded to each information-capturing device 30, and finally stored in the storing unit 330 of the information-capturing device 30. Therefore, each information-capturing device 30 sends its position data and its identification code to the server 60. The server 60 compiles a neighboring device checklist according to the position data of each information-capturing device 30 and identification codes of the information-capturing devices 30 within a predetermined sensing radius of the position data of each information-capturing device 30, and then sends the neighboring device checklist to the corresponding information-capturing device 30. For instance, the information-capturing device 30 capable of networking regularly communicates with the server 60 through a network and thus updates its position data, receives and records the neighboring device checklist compiled according to identification codes of the other information-capturing devices 30 within a predetermined sensing radius of the updated position data. The information-capturing device 30 not capable of networking sends its position data to the neighboring electronic device capable of networking by a near-field communication technology or in a wired manner so as for the position data to be sent to the server 60, and then receives the returned neighboring device checklist.

In some embodiments, the storing unit is implemented as one or more storage components. The storage components are each, for example, a memory or a register, but the present disclosure is not limited thereto.

In some embodiments, the near-field communication module is, for example, a Bluetooth module, but the present disclosure is not limited thereto.

In some embodiments, the controlling unit is implemented as one or more processing components. Each processing component is a microprocessor, a microcontroller, a digital signal processor, a central processing unit (CPU), a programmable logic controller, a state indicator, or any analog and/or digital device operating signals according to operation commands.

In some embodiments, the video recording unit is implemented as an image pickup lens and an image processing unit. In an exemplary embodiment, the image processing unit is an image signal processor (ISP). In another exemplary embodiment, the image processing unit and the controlling unit are implemented as the same chip.

In conclusion, an embodiment of the present disclosure provides a method of starting an information-capturing device wirelessly, as opposed to manually, as soon as an event occurs in the vicinity of the information-capturing device, so as for the information-capturing device to record ambient images and/or sounds automatically and instantly. Some other embodiments of the present disclosure provide another method of starting an information-capturing device capable of informing a remote server of an event through a neighboring device which supports a remote communication technology.

## Claims

1. An information-capturing device (30), comprising:
a near-field communication module (310) configured to receive an event message,
wherein the event message includes a destination information which specifies a dedicated identification code;
a video recording unit (320) configured to capture ambient data;
a storing unit (330),
wherein the information capturing device (30) has a first identification code which is stored in the storing unit (330); and
a controlling unit (340)
coupled to the near-field communication module (310), the video recording unit (320), and the storing unit (330),
and configured to compare the first identification code with the dedicated identification code specified by the destination information contained in the event message,
wherein the controlling unit (340) is configured to start the video recording unit (320) for capturing the ambient data, if the first identification code matches the dedicated identification code specified by the destination information contained in the event message;
and the controlling unit (340) is configured to broadcast the event message to further information-capturing devices within a signal sensing radius through the near-field communication module (310), if the first identification code does not match the dedicated identification code specified by the destination information contained in the event message;
wherein
the information-capturing device (30) further comprises:
a remote communication module (350) coupled to the controlling unit (340);
wherein the controlling unit (340) is configured to generate a report signal according to the event message, and then the remote communication module (350) is configured to send the report signal to a server (60), wherein the report signal includes the event message which further includes a source information indicating an identification code of a state sensor (20) which generates the event message, and consequently, informing the server (60) of the place where an event occurs and a position data of the information-capturing device (30).

2. The information-capturing device (30) of claim 1, wherein the event message further includes a timestamp, such that the controlling unit (340)
is configured to determine whether a time difference between the timestamp and a current time is less than or equal to a time threshold if the first identification code does not match the dedicated identification code specified by the destination information contained in the event message,
is configured to discard the event message if the time difference between the timestamp and the current time is greater than the time threshold; and
is configured to broadcast the event message through the near-field communication module (310) if the time difference between the timestamp and the current time is less than or equal to the time threshold.

3. The information-capturing device (30) of claim 1, wherein the event message further includes a position data indicating a geographic position at which the state sensor (20) generates the event message, such that the controlling unit (340)
is configured to determine whether a distance difference between the position data indicating the geographic position at which at which the state sensor (20) generates the event message and a current position of the information-capturing device (30) is less than or equal to a distance threshold if the first identification code does not match the dedicated identification code specified by the destination information contained in the event message;
is configured to discard the event message if the distance difference between the position data indicating the geographic position at which at which the state sensor (20) generates the event message and a current position of the information-capturing device (30) is greater than the distance threshold; and
is configured to broadcast the event message through the near-field communication module (310) if the distance difference between the position data indicating the geographic position at which at which the state sensor (20) generates the event message and a current position of the information-capturing device (30) is greater than the distance threshold.

4. The information-capturing device (30) according to any of claims 1-3,
wherein the storing unit (330) is configured to further store a neighboring device checklist; and
wherein the controlling unit (340)
is configured to search the neighboring device checklist by the destination information if the first identification code does not match the dedicated identification code specified by the destination information contained in the event message, and
is configured to broadcast the event message through the near-field communication module (310) if the neighboring device checklist has at least a second identification code matching the dedicated identification code specified by the destination Information contained in the event message.

## Patentansprüche

1. Informationserfassungsvorrichtung (30), aufweisend:
ein Nahfeldkommunikationsmodul (310), das konfiguriert ist, um eine Ereignisnachricht zu empfangen,
wobei die Ereignisnachricht eine Zielinformation enthält, die einen dedizierten Identifikationscode spezifiziert,
eine Videoaufzeichnungseinheit (320), die konfiguriert ist, um Umgebungsdaten zu erfassen,
eine Speichereinheit (330),
wobei die Informationserfassungsvorrichtung (30) einen ersten Identifikationscode aufweist, der in der Speichereinheit (330) gespeichert ist, und
eine Steuereinheit (340),
die mit dem Nahfeldkommunikationsmodul (310), der Videoaufzeichnungseinheit (320) und der Speichereinheit (330) gekoppelt ist
und konfiguriert ist, um den ersten Identifikationscode mit dem dedizierten Identifikationscode zu vergleichen, der durch die in der Ereignisnachricht enthaltene Zielinformation spezifiziert ist,
wobei die Steuereinheit (340) konfiguriert ist, um die Videoaufzeichnungseinheit (320) zum Erfassen der Umgebungsdaten zu starten, wenn der erste Identifikationscode mit dem dedizierten Identifikationscode übereinstimmt, der durch die in der Ereignisnachricht enthaltene Zielinformation spezifiziert ist,
und die Steuereinheit (340) konfiguriert ist, um die Ereignisnachricht durch das Nahfeldkommunikationsmodul (310) an weitere Informationserfassungsvorrichtungen innerhalb eines Signalerfassungsradius rundzusenden, wenn der erste Identifikationscode nicht mit dem dedizierten Identifikationscode übereinstimmt, der durch die in der Ereignisnachricht enthaltene Zielinformation spezifiziert ist,
wobei
die Informationserfassungsvorrichtung (30) ferner aufweist:
ein Fernkommunikationsmodul (350), das mit der Steuereinheit (340) gekoppelt ist,
wobei die Steuereinheit (340) konfiguriert ist, um ein Berichtssignal gemäß der Ereignisnachricht zu erzeugen, und dann das Fernkommunikationsmodul (350) konfiguriert ist, um das Berichtssignal an einen Server (60) zu senden, wobei das Berichtssignal die Ereignisnachricht enthält, die ferner eine Quelleninformation enthält, die einen Identifikationscode eines Zustandssensors (20) angibt, der die Ereignisnachricht erzeugt, und folglich den Server (60) über den Ort, an dem ein Ereignis auftritt, und über Positionsdaten der Informationserfassungsvorrichtung (30) informiert.

2. Informationserfassungsvorrichtung (30) gemäß Anspruch 1, wobei die Ereignisnachricht ferner einen Zeitstempel enthält, so dass die Steuereinheit (340)
konfiguriert ist, um zu ermitteln, ob eine Zeitdifferenz zwischen dem Zeitstempel und einer aktuellen Zeit kleiner oder gleich einem Zeitschwellenwert ist, wenn der erste Identifikationscode nicht mit dem dedizierten Identifikationscode übereinstimmt, der durch die in der Ereignisnachricht enthaltene Zielinformation spezifiziert ist,
konfiguriert ist, um die Ereignisnachricht zu verwerfen, wenn die Zeitdifferenz zwischen dem Zeitstempel und der aktuellen Zeit größer als der Zeitschwellenwert ist, und
konfiguriert ist, um die Ereignisnachricht durch das Nahfeldkommunikationsmodul (310) rundzusenden, wenn die Zeitdifferenz zwischen dem Zeitstempel und der aktuellen Zeit kleiner oder gleich dem Zeitschwellenwert ist.

3. Informationserfassungsvorrichtung (30) gemäß Anspruch 1, wobei die Ereignisnachricht ferner Positionsdaten enthält, die eine geographische Position angeben, an der der Zustandssensor (20) die Ereignisnachricht erzeugt, so dass die Steuereinheit (340)
konfiguriert ist, um zu ermitteln, ob eine Abstandsdifferenz zwischen den Positionsdaten, die die geografische Position angeben, an der der Zustandssensor (20) die Ereignisnachricht erzeugt, und einer aktuellen Position der Informationserfassungsvorrichtung (30) kleiner oder gleich einem Abstandsschwellenwert ist, wenn der erste Identifikationscode nicht mit dem dedizierten Identifikationscode übereinstimmt, der durch die in der Ereignisnachricht enthaltene Zielinformation spezifiziert ist,
konfiguriert ist, um die Ereignisnachricht zu verwerfen, wenn die Abstandsdifferenz zwischen den Positionsdaten, die die geographische Position anzeigen, an der der Zustandssensor (20) die Ereignisnachricht erzeugt, und einer aktuellen Position der Informationserfassungsvorrichtung (30) größer als der Abstandsschwellenwert ist, und
konfiguriert ist, um die Ereignisnachricht durch das Nahfeldkommunikationsmodul (310) rundzusenden, wenn die Abstandsdifferenz zwischen den Positionsdaten, die die geografische Position anzeigen, an der der Zustandssensor (20) die Ereignisnachricht erzeugt, und einer aktuellen Position der Informationserfassungsvorrichtung (30) größer als der Abstandsschwellenwert ist.

4. Informationserfassungsvorrichtung (30) gemäß irgendeinem der Ansprüche 1 bis 3,
wobei die Speichereinheit (330) konfiguriert ist, um ferner eine Benachbarte-Vorrichtung-Checkliste zu speichern, und
wobei die Steuereinheit (340)
konfiguriert ist, um die Benachbarte-Vorrichtung-Checkliste nach der Zielinformation zu durchsuchen, wenn der erste Identifikationscode nicht mit dem dedizierten Identifikationscode übereinstimmt, der durch die in der Ereignisnachricht enthaltene Zielinformation spezifiziert ist, und
konfiguriert ist, um die Ereignisnachricht durch das Nahfeldkommunikationsmodul (310) rundzusenden, wenn die Benachbarte-Vorrichtung-Checkliste mindestens einen zweiten Identifikationscode aufweist, der mit dem dedizierten Identifikationscode übereinstimmt, der durch die in der Ereignisnachricht enthaltene Zielinformation spezifiziert ist.

## Revendications

1. Dispositif de saisie d'informations (30), comprenant :
un module de communication en champ proche (310) configuré pour recevoir un message d'événement,
dans lequel le message d'événement inclut une information de destination qui spécifie un code d'identification dédié ;
une unité d'enregistrement vidéo (320) configurée pour saisir des données ambiantes ;
une unité de stockage (330),
dans lequel le dispositif de saisie d'informations (30) présente un premier code d'identification qui est stocké dans l'unité de stockage (330) ; et
une unité de commande (340) raccordée au module de communication en champ proche (310), à l'unité d'enregistrement vidéo (320) et à l'unité de stockage (330),
et configuré pour comparer le premier code d'identification au code d'identification dédié spécifié par les informations de destination contenues dans le message d'événement,
dans lequel l'unité de commande (340) est configurée pour démarrer l'unité d'enregistrement vidéo (320) pour saisir les données ambiantes, si le premier code d'identification correspond au code d'identification dédié spécifié par les informations de destination contenues dans le message d'événement ;
et l'unité de commande (340) est configurée pour diffuser le message d'événement à d'autres dispositifs de saisie d'informations dans un rayon de détection de signal à travers le module de communication en champ proche (310), si le premier code d'identification ne correspond pas au code d'identification dédié spécifié par les informations de destination contenues dans le message d'événement ;
dans lequel le dispositif de saisie d'informations (30) comprend en outre :
un module de communication distant (350) raccordé à l'unité de commande (340) ;
dans lequel l'unité de commande (340) est configurée pour générer un signal de rapport selon le message d'événement, et ensuite le module de communication distant (350) est configuré pour envoyer le signal de rapport à un serveur (60), dans lequel le signal de rapport inclut le message d'événement qui inclut en outre une information source indiquant un code d'identification d'un capteur d'état (20) qui génère le message d'événement, et par conséquent, informant le serveur (60) de l'endroit dans lequel un événement se produit et une donnée de position du dispositif de saisie d'information (30).

2. Dispositif de saisie d'information (30) selon la revendication 1, dans lequel le message d'événement inclut en outre un horodatage, de sorte que l'unité de commande (340)
est configurée pour déterminer si une différence de temps entre l'horodatage et un temps actuel est inférieure ou égale à un seuil de temps si le premier code d'identification ne correspond pas au code d'identification dédié spécifié par les informations de destination contenues dans le message d'événement,
est configurée pour mettre au rebut le message d'événement si la différence de temps entre l'horodatage et le temps actuel est supérieure au seuil de temps ; et
est configurée pour diffuser le message d'événement à travers le module de communication en champ proche (310) si la différence de temps entre l'horodatage et le temps actuel est inférieure ou égale au seuil de temps.

3. Dispositif de saisie d'information (30) selon la revendication 1, dans lequel le message d'événement inclut en outre une donnée de position indiquant une position géographique à laquelle le capteur d'état (20) génère le message d'événement, de sorte que l'unité de commande (340)
est configurée pour déterminer si une distance entre les données de position indiquant la position géographique à laquelle le capteur d'état (20) génère le message d'événement et une position actuelle du dispositif de saisie d'informations (30) est inférieure ou égale à un seuil de distance si le premier code d'identification ne correspond pas au code d'identification spécifié par les informations de destination contenues dans le message d'événement ;
est configurée pour mettre au rebut le message d'événement si la différence de distance entre les données de position indiquant la position géographique à laquelle le capteur d'état (20) génère le message d'événement et une position actuelle du dispositif de saisie d'informations (30) est supérieure au seuil de distance ; et
est configurée pour diffuser le message d'événement à travers le module de communication en champ proche (310) si la différence de distance entre les données de position indiquant la position géographique à laquelle le capteur d'état (20) génère le message d'événement et une position actuelle du dispositif de saisie d'informations (30) est supérieure au seuil de distance.

4. Dispositif de saisie d'informations (30) selon l'une quelconque des revendications 1 à 3,
dans lequel l'unité de stockage (330) est configurée pour stocker ultérieurement une liste de contrôle d'un dispositif voisin ; et
dans lequel l'unité de commande (340)
est configurée pour rechercher la liste de contrôle du dispositif voisin par les informations de destination si le premier code d'identification ne correspond pas au code d'identification dédié spécifié par les informations de destination contenues dans le message d'événement, et
est configurée pour diffuser le message d'événement à travers le module de communication en champ proche (310) si la liste de commande du dispositif voisin présente au moins un second code d'identification correspondant au code d'identification dédié spécifié par les informations de destination contenues dans le message d'événement.
